# EUROPEAN PATENT APPLICATION

(11) **EP 4 635 770 A1**
(43) Date of publication of application: **22.10.2025**
(21) Application number: 23903071.1
(22) Date of filing: 02.10.2023
(51) Int. Cl.: B60K 11/04, E02F 9/00, B66C 13/12, B66C 13/52

(54) **CRANE**

(30) Priority: 15.12.2022 JP 2022200129
(71) Applicant: TADANO LTD., Takamatsu-shi, Kagawa 761-0185 (JP)
(72) Inventor: HATA, Yuki, Takamatsu-shi, Kagawa 761-0185 (JP)
(74) Representative: MFG Patentanwälte Meyer-Wildhagen Meggle-Freund Gerhard PartG mbB
(86) International application number: PCT/JP2023/035939
(87) International publication number: WO 2024/127772

(57) **Abstract**

A crane includes: an upper slewing body that supports a boom; and a travel vehicle body that supports the upper slewing body and travels based on electric power of a power supply unit, wherein the travel vehicle body includes: a high-voltage equipment that is the power supply unit or a device connected to the power supply unit, a cooling device that is arranged above the high-voltage equipment, has an exhaust port which is open at a top, and cools the power supply unit, and a drainage tray that is provided between the high-voltage equipment and the cooling device and drains water which has entered the cooling device from the exhaust port.

## Description

### Technical Field

The present invention relates to a crane.

### Background Art

Patent Literature 1 discloses a mobile crane including a lower travel body that has a travel function and an upper slewing body that is provided on an upper portion of the lower travel body in a rotatable manner. The lower travel body includes an engine and travels based on power generated by the engine.

### Citation List

### Patent Literature

Patent Literature 1: JP 2020-66273 A

### Summary of the Invention

### Problems to be Solved by the Invention

In recent years, from the viewpoint of environmental protection and other considerations, the electrification of cranes as described above has been increasingly demanded.

The objective of the present invention is to provide a crane capable of traveling using electric power.

### Solutions to Problems

One aspect of a crane according to the present invention includes: an upper slewing body that supports a boom; and a travel vehicle body that supports the upper slewing body and travels based on electric power of a power supply unit, wherein the travel vehicle body includes: a high-voltage equipment that is the power supply unit or a device connected to the power supply unit, a cooling device that is arranged above the high-voltage equipment, has an exhaust port which is open at a top, and cools the power supply unit, and a drainage tray that is provided between the high-voltage equipment and the cooling device and drains water which has entered the cooling device from the exhaust port.

### Effects of the Invention

According to the present invention, it is possible to provide a crane capable of traveling using electric power.

### Brief Description of Drawings

Fig. 1 is a schematic diagram of a mobile crane according to an embodiment.
Fig. 2 is a block diagram schematically illustrating a system configuration of the mobile crane.
Fig. 3 is a perspective view of the crane with a part of configuration omitted.
Fig. 4 is a schematic diagram illustrating a top view of an area around a battery.
Fig. 5 is a schematic diagram illustrating a side view of the area around the battery.
Fig. 6 is a cross-sectional view taken along C1-C1 of Fig. 4.
Fig. 7 is a perspective view of a support.
Fig. 8 is a planar schematic diagram illustrating a positional relationship between a cooling device of a cooling system and a drainage tray.
Fig. 9 is a planar schematic diagram illustrating a positional relationship between the drainage tray and a junction box.
Fig. 10 is a view corresponding to the C1-C1 cross-sectional view of Fig. 4, illustrating a modified example of a support configuration of the junction box.

### Description of Embodiments

Hereinafter, an example of an embodiment of a crane according to the present invention will be described in detail with reference to the drawings. The crane according to the embodiment described below is an example of the crane according to the present invention, and the present invention is not limited by the embodiment described below.

### [Embodiment]

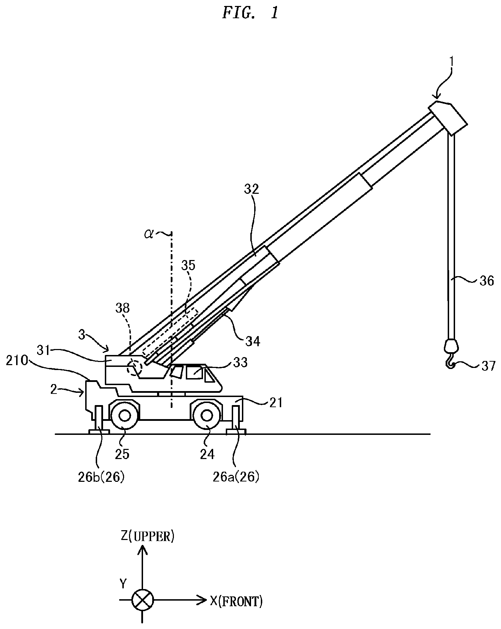

Fig. 1 is a schematic diagram of a mobile crane 1 (in the illustrated example, a rough terrain crane) according to the present embodiment. The mobile crane may be, for example, an all terrain crane, a truck crane, or a loaded truck crane (also referred to as cargo crane). Here, the crane according to the present invention may be any type of crane.

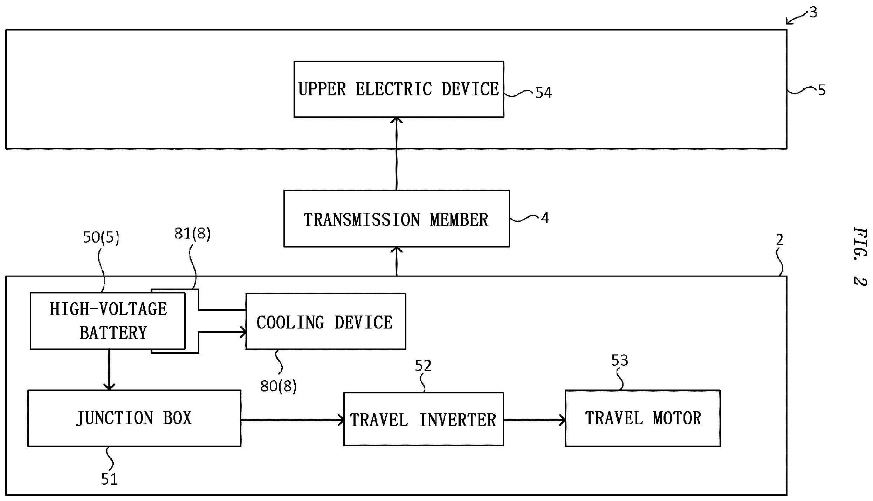

The mobile crane 1 includes a lower travel body 2 and an upper slewing body 3. The mobile crane 1 is an electric-powered crane including a high-voltage battery 50 (see Fig. 2). The mobile crane 1 travels based on electric power supplied from the high-voltage battery 50. Thus, the mobile crane 1 does not include an engine.

In addition, the mobile crane 1 executes operations other than traveling (e.g., crane work, cooling and/or heating) based on electric power supplied from the high-voltage battery 50. The crane work refers, for example, to rotation operation and/or winching operation during cargo conveyance work. The detailed configuration of the mobile crane 1 will be described below.

First, with reference to Fig. 1, the configuration of the upper slewing body 3 will be described. Fig. 1 is a schematic view of the mobile crane 1. The upper slewing body 3 is provided on an upper portion of the lower travel body 2 and is configured to be rotatable about a rotation axis α relative to the lower travel body 2. The upper slewing body 3 includes a turn table 31, a telescopic boom 32, and a cab 33.

The turn table 31 is supported on an upper portion of the lower travel body 2 by a bearing (not illustrated). The turn table 31 rotates based on power generated by a turn actuator (not illustrated) provided on the upper slewing body 3.

In the present embodiment, the turn actuator is a hydraulic motor. This motor is activated based on the supply/discharge of hydraulic oil. The hydraulic oil is supplied from the lower travel body 2. Note that the turn actuator may be an electric motor. In such cases, the electric motor for turning is driven by electric power supplied from the high-voltage battery 50 described later.

The telescopic boom 32 is supported by the turn table 31 and includes a plurality of telescopically assembled booms. The telescopic boom 32 can adjust a hoist angle (hoist) based on power generated by a hoist cylinder 34.

The hoist cylinder 34 is a telescopic hydraulic cylinder provided on the upper slewing body 3. The hoist cylinder 34 is activated based on the supply/discharge of hydraulic oil. Note that the hydraulic oil is supplied by a hydraulic oil supply device (not illustrated) provided on the lower travel body 2.

Furthermore, the telescopic boom 32 extends/retracts based on power generated by a telescopic cylinder 35. The telescopic cylinder 35 is a hydraulic cylinder provided inside the telescopic boom 32. The telescopic cylinder 35 is activated based on the supply/discharge of hydraulic oil. Note that the hydraulic oil is supplied by a hydraulic oil supply device (not illustrated) provided on the lower travel body 2.

Additionally, the telescopic boom 32 supports a wire rope 36. The wire rope 36 hangs down from a tip end portion of the telescopic boom 32, and a hook 37 is provided at the tip end portion. A portion of the wire rope 36 is wound by a winch 38.

The winch 38 is driven (rotates) based on power generated by a winch actuator (not illustrated). In the present embodiment, the winch actuator is a hydraulic motor provided on the turn table 31. This motor is activated based on the supply/discharge of hydraulic oil. Note that the hydraulic oil is supplied by a hydraulic oil supply device (not illustrated) provided on the lower travel body 2.

When the winch 38 rotates, the wire rope 36 is either wound up or unwound depending on the rotation direction of the winch 38. Note that the winch motor may also be an electric motor. In this case, the winch electric motor is driven by electric power supplied from the high-voltage battery 50 described later.

Next, with reference to Figs. 1 to 9, the lower travel body 2 will be described. Note that to describe the structure of the lower travel body 2, an orthogonal coordinate system (X, Y, Z) illustrated in the drawings will be used. X-direction coincides with the front-rear direction of the lower travel body 2. +X direction coincides with the front side of the lower travel body 2. -X direction coincides with the rear side of the lower travel body 2. Y-direction coincides with the left-right direction of the lower travel body 2. +Y direction coincides with the left side when viewing the lower travel body 2 from the rear toward the front. -Y direction coincides with the right side when viewing the lower travel body 2 from the rear toward the front. Z-direction coincides with the vertical direction of the lower travel body 2. +Z direction coincides with the upper side of the lower travel body 2. -Z direction coincides with the lower side of the lower travel body 2.

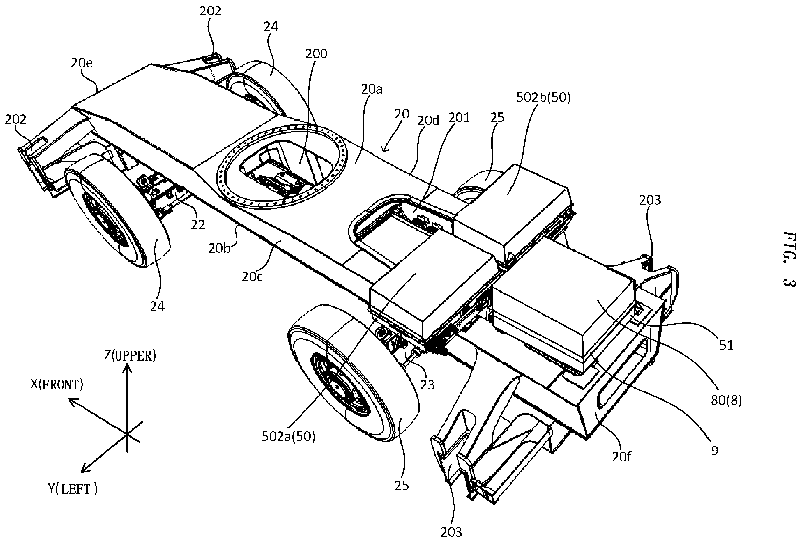

The lower travel body 2 corresponds to an example of a travel vehicle body and is capable of traveling by electric power. Specifically, as illustrated in Figs. 1 and 3, the lower travel body 2 includes a frame 20, a body 21, a front axle 22, a rear axle 23, front tires 24, rear tires 25, and outriggers 26.

The frame 20 extends in the front-rear direction and forms the skeleton of the lower travel body 2, being a box-shaped member having a rectangular cross-sectional shape, for example. The frame 20 includes an upper plate section 20a, a lower plate section 20b, a left plate section 20c, a right plate section 20d, a front plate section 20e, and a rear plate section 20f.

The frame 20 includes a transmission member housing 200 configured by a through-hole penetrating the frame 20 vertically. The transmission member housing 200 is provided centrally in the frame 20 between the front axle 22 and the rear axle 23.

The frame 20 includes a battery housing 201 configured by a through-hole penetrating the frame 20 vertically. The battery housing 201 is open at least at the top and corresponds to an example of a frame opening. The battery housing 201 is provided in the frame 20 from above the rear axle 23 to the rear end portion of the frame 20.

In other words, the battery housing 201 may be understood as being provided in the rear portion of the frame 20. The cross-sectional shape of the portion of the frame 20 where the battery housing 201 is formed is a closed cross-section formed of a plurality of continuous plate sections. Note that the cross-section of the frame 20 refers to the cross-section obtained when cutting the frame 20 along the YZ plane.

The position of the battery housing is not limited to the illustrated configuration. The battery housing may be provided on the frame 20 from above the front axle 22 to the front end portion of the frame 20. In this case, the battery housing may be configured by a through-hole penetrating the frame 20 vertically.

The frame 20 includes a pair of front outrigger supports 202 at the front end portion. The frame 20 includes a pair of rear outrigger supports 203 at the rear end portion.

Each of the front outrigger supports 202 is frame for supporting a front outrigger 26a. Similarly, each of the rear outrigger supports 203 is frame for supporting a rear outrigger 26b.

The rear outrigger supports 203 correspond to an example of an outrigger support frame and are provided on the frame 20 to be at a position vertically overlapping with a portion of the battery housing 201 (specifically, the rear end portion). Among the portions of the frame 20 where the battery housing 201 is provided, the portion corresponding to the rear outrigger supports 203 has higher rigidity compared to other portions.

The body 21 (see Fig. 1) is a member forming the external shape of the lower travel body 2 and is supported by the frame 20.

The front axle 22 is a shaft member extending in the left-right direction and is supported at a portion proximal to the front end of the lower plate section 20b of the frame 20. The front tires 24 are respectively rotatably supported at the two end portions of the front axle 22 in the left-right direction.

The rear axle 23 is a shaft member extending in the left-right direction and is supported at a portion proximal to the rear end of the lower plate section 20b of the frame 20. The rear tires 25 are respectively rotatably supported at the two end portions of the rear axle 23 in the left-right direction.

The outriggers 26 include a pair of front outriggers 26a and a pair of rear outriggers 26b. The pair of the front outriggers 26a is respectively supported by the pair of the front outrigger supports 202 of the frame 20. The pair of the rear outriggers 26b is respectively supported by the pair of the rear outrigger supports 203 of the frame 20.

The mobile crane 1 also includes a transmission member 4 disposed between the lower travel body 2 and the upper slewing body 3. Specifically, the transmission member 4 is provided in the transmission member housing 200 of the frame 20. The transmission member 4 allows the transmission of electric power, fluids (hydraulic oil and/or compressed air), signals, etc. between the lower travel body 2 and the upper slewing body 3, which rotate relative to each other.

As illustrated in Fig. 2, the mobile crane 1 further includes a high-voltage electrical system 5. The configuration of the high-voltage electrical system 5 will be described in detail below.

The high-voltage electrical system 5 is a system that executes traveling of the lower travel body 2 and non-traveling operations (e.g., crane work, cooling, and/or heating) based on electric power supplied from the high-voltage battery 50.

The high-voltage electrical system 5 includes, as primary elements, the high-voltage battery 50, a junction box 51, a travel inverter 52, a travel motor 53, the transmission member 4, and an upper electrical device 54. These elements that form the high-voltage electrical system 5 are connected via electrical circuits.

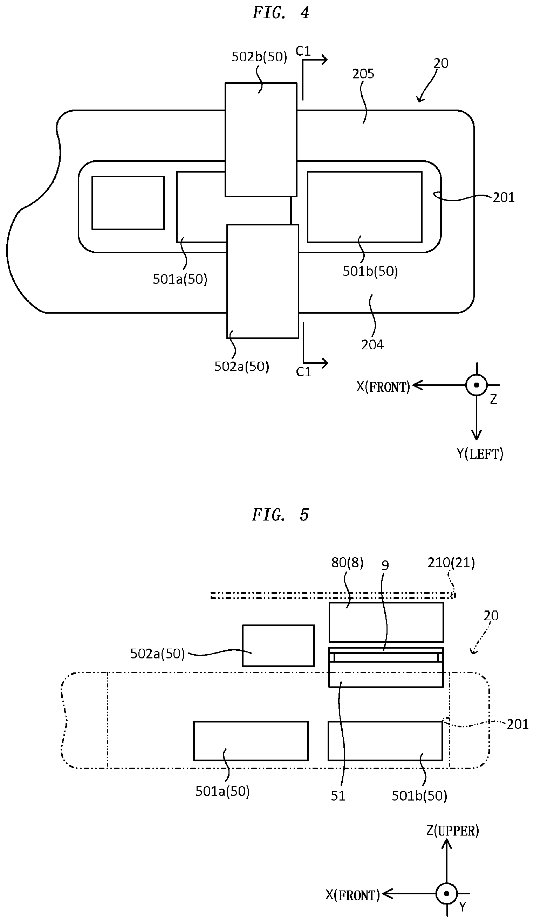

The high-voltage battery 50 corresponds to an example of a power supply unit and includes a plurality of batteries 501a, 501b, 502a, 502b, as illustrated in Figs. 4 and 5. Note that in Fig. 4, the junction box 51, a cooling device 80, and a drainage tray 9 which are described later are omitted. The batteries 501a and 501b are provided in the battery housing 201 of the frame 20.

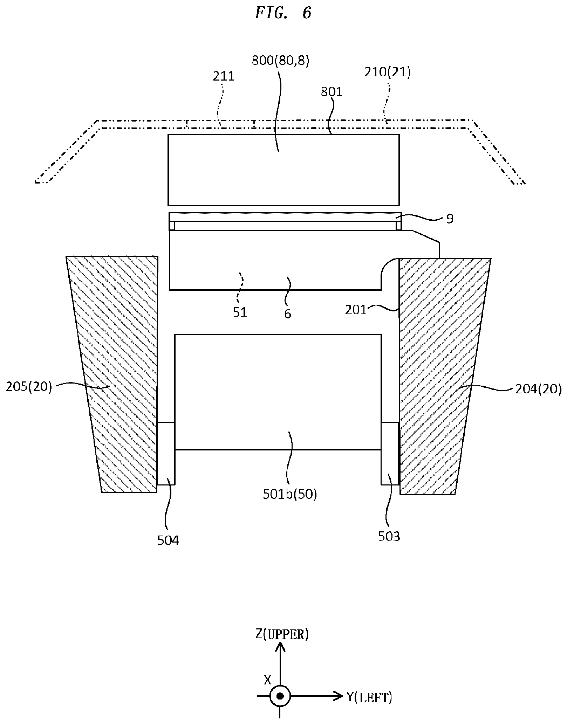

Specifically, the front battery 501a and rear battery 501b are arranged front-to-back within the battery housing 201.
the batteries 501a and 501b are each fixed to the frame 20 at both ends. Here, with reference to Fig. 6, the fixing configuration of the rear battery 501b relative to the frame 20 will be described.

Fig. 6 is a cross-sectional view taken along C1-C1 of Fig. 4. In other words, Fig. 6 is a schematic view illustrating the area around the rear battery 501b as viewed from the front. The portion of the frame 20 located on the left side of the battery housing 201 is a left-side frame 204. The left-side frame 204 corresponds to an example of a left-side frame portion.

The portion of the frame 20 located on the right side of the battery housing 201 is a right-side frame 205. The right-side frame 205 corresponds to an example of a right-side frame portion. The battery housing 201 is sandwiched between the left-side frame 204 and the right-side frame 205 in the left-right direction.

As illustrated in Fig. 6, the rear battery 501b has the left end portion and the right end portion fixed to the left-side frame 204 and the right-side frame 205, respectively. Specifically, the left end portion of the rear battery 501b is fixed to the lower end portion of the left-side frame 204 by a vibration damping support member 503 such as a rubber mount.

Similarly, the right end portion of the rear battery 501b is fixed to the lower end portion of the right-side frame 205 by a vibration damping support member 504 such as a rubber mount.

The vibration damping support members 503 and 504 respectively suppress the transmission of twisting and vibrations from the left-side frame 204 and the right-side frame 205 to the rear battery 501b. Note that the fixing configuration of the front battery 501b to the frame 20 is similar to the fixing configuration of the rear battery 501b to the frame 20.

Thus, in the present embodiment, the dead space of the frame 20 is effectively utilized, enabling compact arrangement of the high-voltage battery 50 while reducing damage due to impact, etc. to the high-voltage battery 50. Additionally, the batteries 502a and 502b are arranged externally on the frame 20 and above the batteries 501a and 501b.

In addition, as described above, the batteries 501a and 501b are fixed to the lower end portion of the frame 20, which exhibits relatively small deformation when the frame 20 is twisted. Moreover, the batteries 501a and 501b are fixed to the frame 20 by the vibration damping support members 503 and 504. This configuration suppresses damage to the batteries 501a and 501b caused by twisting of the frame 20.

The junction box 51 corresponds to an example of high-voltage equipment and is provided on the lower travel body 2. The junction box 51 integrates or distributes electric power supplied from the high-voltage battery 50. The junction box 51 is connected to both the high-voltage battery 50 and the travel inverter 52.

Here, with reference to Figs. 5 to 7, the junction box 51 will be described. The junction box 51 is provided above the rear battery 501b within the battery housing 201.

As illustrated in Fig. 5, the lower half of the junction box 51 is provided within the battery housing 201. On the other hand, the upper half of the junction box 51 is provided above the battery housing 201. Note that in Fig. 5, the support 6 described later is omitted.

In the present embodiment, the junction box 51 is cantilever-fixed to the frame 20. Specifically, the junction box 51 is cantilever-fixed to the left-side frame 204 of the frame 20 by the support 6 (see Fig. 6).

In the present embodiment, the junction box 51 is supported above the pair of the rear outrigger supports 203 of the frame 20. In other words, the junction box 51 is supported on a portion of the frame 20 with relatively high rigidity. This configuration further suppresses effects of the twisting of the frame 20 on the junction box 51 in the rear of the vehicle, which is more susceptible to twisting. Note that the fixing position of the junction box 51 is not limited to the position described in the present embodiment. The junction box 51 may be cantilever-fixed around the battery housing 201 of the frame 20.

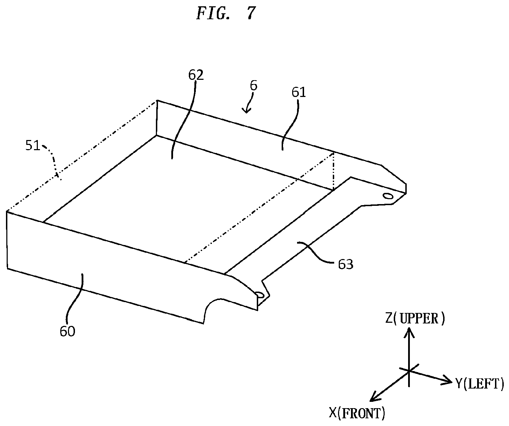

Here, with reference to Figs. 6 and 7, the support 6 will be described. The support 6 is a member for cantilever-fixing the junction box 51 to the frame 20.

As illustrated in Fig. 7, the support 6 includes a front plate section 60, a rear plate section 61, a lower plate section 62, and a fixed plate section 63. Note that Fig. 7 schematically illustrates the shapes of these plate sections forming the support 6. The shape of each plate section is not limited to the shape illustrated in Fig 7. For example, each plate section may include lightening holes for weight reduction.

The front plate section 60 is a plate-shaped member parallel to the YZ plane (the left-right direction and the vertical direction). The front plate section 60 has a longitudinal direction aligned with the left-right direction, and a lateral direction aligned with the vertical direction. The front plate section 60 faces the front side surface of the junction box 51 in the front-rear direction.

The rear plate section 61 is a plate-shaped member parallel to the YZ plane (the left-right direction and the vertical direction). In other words, the rear plate section 61 is a plate-shaped member parallel to the front plate section 60. The rear plate section 61 faces the front plate section 60 in the front-rear direction.

The rear plate section 61 has a longitudinal direction aligned with the left-right direction, and a lateral direction aligned with the vertical direction. The rear plate section 61 faces the rear side surface of the junction box 51 in the front-rear direction.

The lower plate section 62 is a plate-shaped member parallel to the XY plane (the front-rear direction and the left-right direction). The lower plate section 62 connects a lower end portion of the front plate section 60 to a lower end portion of the rear plate section 61 in the front-rear direction. The lower plate section 62 supports the junction box 51 from below.

For example, the junction box 51 is fixed to the lower plate section 62 by a support member (not illustrated). The junction box 51 may be fixed to the front plate section 60 and rear plate section 61 by support members (not illustrated).

The fixed plate section 63 is a plate-shaped member parallel to the XY plane (the front-rear direction and the left-right direction). The fixed plate section 63 connects a left end portion of the front plate section 60 to a left end portion of the rear plate section 61 in the front-rear direction.

The fixed plate section 63 is provided above the lower plate section 62. The fixed plate section 63 is fixed to the upper surface of the frame 20 (specifically, the left-side frame 204) by fasteners such as bolts. By fixing the fixed plate section 63 to the frame 20, the support 6 is fixed to the frame 20.

Note that the support 6 has a left end portion (specifically, the fixed plate section 63) which is fixed to the frame 20, and a right end portion which is not fixed to the frame 20. In other words, the junction box 51 has a left end portion which is fixed to the frame 20, and a right end portion which is not fixed to the frame 20.

The right end portion of the support 6 does not contact the frame 20 (specifically, the right-side frame 205). In other words, the right end portion of the support 6 (in other words, the junction box 51) is provided on the left side of the right-side frame 205.

Note that although not illustrated, the right end portion of the support 6 may be supported by the right-side frame 205 via, for example, a slide plate. In this case, the right end portion of the support 6 is movable relative to the right-side frame 205.

Furthermore, the shape of the support for fixing the junction box to the frame is not limited to that of the support 6 in present embodiment. In the present embodiment, the support 6 fixes the junction box 51 to the left-side frame 204. Here, the support may fix the junction box 51 to the right-side frame 205.

In the present embodiment, the support 6 fixes the junction box 51 to the upper surface of the frame 20 (specifically, the left-side frame 204). Here, the support 6 may fix the junction box 51 to a side surface (i.e., the right side surface of the left-side frame 204) of the frame 20 (specifically, the left-side frame 204).

The junction box 51 is fixed to the support 6. Specifically, the junction box 51 is provided within the space enclosed by the front plate section 60, the rear plate section 61, and the lower plate section 62. The junction box 51 is fixed to the support 6 by a support member (not illustrated) .

As described above, in the present embodiment, the junction box 51 is cantilever-fixed to the left-side frame 204. This configuration suppresses the transmission of twisting to the junction box 51 during crane works even when the left-side frame 204 and the right-side frame 205 are twisted. Consequently, damage to the junction box 51 caused by twisting of the frame 20 is suppressed.

Specifically, the aforementioned twisting of the left-side frame 204 and right-side frame 205 occurs due to the rotation of the telescopic boom 32. For example, when the telescopic boom 32 rotates to the right side of the mobile crane 1, a vertical reaction force acting on the right front outrigger 26a becomes greater than a vertical reaction force acting on the left front outrigger 26a.

Based on the difference in reaction forces acting on the outriggers, a moment in a predetermined direction acts on the frame 20. This moment then twists the left-side frame 204 and the right-side frame 205.

For example, when the junction box 51 is fixed to both the left-side frame 204 and the right-side frame 205, the twisting of the left-side frame 204 and the right-side frame 205 may be transmitted to the junction box 51 (in the present embodiment, the support 6), and the junction box 51 (in the present embodiment, the support 6) may be damaged.

In the present embodiment, since the above-mentioned fixing configuration of the junction box 51 is adopted, damage to the junction box 51 caused by twisting of the frame 20 can be suppressed.

As illustrated in Figs. 2 and 6, the mobile crane 1 of the present embodiment having the above-mentioned configuration includes a cooling system 8 and the drainage tray 9. The configurations of the cooling system 8 and the drainage tray 9 will be described below.

The cooling system 8 is a device for cooling the high-voltage battery 50 (specifically, the batteries 501a, 501b, 502a, 502b). As illustrated in Fig. 2, the cooling system 8 includes the cooling device 80 and a cooling pipe 81.

The cooling device 80 supplies cooling water to the cooling pipe 81. The cooling pipe 81 is annularly configured. A first end portion (inlet-side end portion) of the cooling pipe 81 is connected to a supply port of the cooling device 80. A second end portion (outlet-side end portion) of the cooling pipe 81 is connected to a return port of the cooling device 80. The cooling pipe 81 is arranged to surround the high-voltage battery 50.

Cooling water supplied from the supply port of the cooling device 80 flows through the cooling pipe 81 and returns to the cooling device 80 via the return port of the cooling device 80. The cooling water cools the high-voltage battery 50 while flowing through the cooling pipe 81. The cooling water returned to the cooling device 80 is cooled by a fan (not illustrated) inside the cooling device 80 and then supplied to the cooling pipe 81 through the supply port.

A housing 800 accommodates a fan (not illustrated) for cooling the cooling water. The housing 800 has, on a side surface, an intake hole (not illustrated) for drawing air into the housing 800. The fan blows air drawn through the intake hole onto pipe through which the cooling water flows, thereby cooling the cooling water.

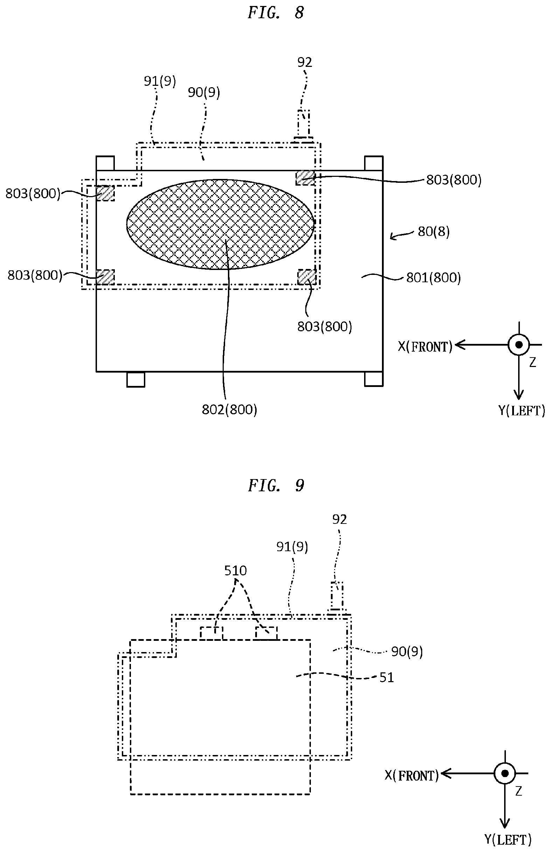

As illustrated in Fig. 8, the housing 800 includes, on an upper surface 801, an exhaust port 802 for discharging air which has been used to cool the cooling water out of the housing 800. The housing 800 also includes a plurality of drainage holes 803 on a bottom surface. In Fig. 8, the drainage holes 803 are indicated by diagonal hatching.

The cooling device 80 having the above-described configuration is provided above the junction box 51, as illustrated in Fig. 6. The cooling device 80 is fixed to the frame 20 by a support (not illustrated).

The area where the junction box 51 and the cooling device 80 are arranged is covered by a rear vehicle cover 210 (see Fig. 6) of the body 21. The rear vehicle cover 210 is a plate-shaped member that covers a predetermined area of the rear portion of the frame 20.

The upper surface 801 of the housing 800 in the cooling device 80 faces the inner surface (i.e., the lower surface) of the rear vehicle cover 210 in the vertical direction. The rear vehicle cover 210 includes an exhaust section 211 (see Fig. 6) at a position facing the exhaust port 802 of the housing 800 in the vertical direction. The exhaust section 211 is configured by, for example, a plurality of through-holes penetrating the rear vehicle cover 210 vertically.

The exhaust section 211 allows air discharged from the exhaust port 802 of the housing 800 to pass through. The air that passes through the exhaust section 211 is discharged outside the rear vehicle cover 210.

As described above, since the exhaust section 211 is provided on the rear vehicle cover 210 at a position corresponding to the exhaust port 802 of the housing 800, the exhaust port 802 of the housing 800 can be understood as being exposed to the exterior of the rear vehicle cover 210.

Therefore, for example, during rainfall, water entering through the exhaust section 211 enters the housing 800 through the exhaust port 802. The water that has entered the housing 800 is discharged downward from the housing 800 through the drainage holes 803 provided on the bottom surface of the housing 800.

In the present embodiment, the junction box 51 as a high-voltage equipment is arranged below the cooling device 80 (the housing 800). Therefore, it is not preferable for the water discharged downward from the housing 800 to come into contact with terminals 510 (see Fig. 9) of the junction box 51, etc.

Therefore, in the present embodiment, the drainage tray 9 (see Fig. 6) is provided between the junction box 51 and the cooling device 80 (the housing 800).

In other words, the drainage tray 9 is provided above the junction box 51 and below the cooling device 80 (the housing 800).

The drainage tray 9 is tray-shaped and has a bottom portion 90 and a peripheral wall portion 91. The drainage tray 9 is supported on the junction box 51 by a support member (not illustrated). In other words, the drainage tray 9 is cantilever-fixed to the frame 20 (specifically, the left-side frame 204) by the junction box 51. Since the junction box 51 is cantilever-fixed to the frame 20 (specifically, the left-side frame 204) by the support 6, the drainage tray 9 can also be understood as being supported by the support 6.

The bottom portion 90 is plate-shaped. The peripheral wall portion 91 is provided along the outer periphery of the bottom portion 90. The peripheral wall portion 91 is plate-shaped and orthogonal to the bottom portion 90, and extends continuously around the entire circumference of the bottom portion 90. In the present embodiment, the height of the peripheral wall portion 91 is uniform around the entire circumference. Here, the height of the peripheral wall portion 91 may differ in some parts.

The drainage tray 9 collects water discharged downward from the cooling device 80 (housing 800) and drains the water in a predetermined direction.

In the present embodiment, the drainage tray 9 is inclined at a predetermined angle relative to the horizontal direction, with the right rear side of the drainage tray 9 being the lowest. The drainage tray 9 has a drain port (not illustrated) at a right rear end portion. The drainage tray 9 guides the collected water toward the right rear direction for drainage.

The drainage tray 9 includes a drainage hose 92 (see Figs. 8 and 9) at a right rear end portion. The drainage hose 92 is connected to the drain port (not illustrated) of the drainage tray 9**.** The drainage hose 92 guides water drained from the drain port of the drainage tray 9 to a predetermined position on the mobile crane 1 for drainage. Specifically, the drainage hose 92 discharges the water into the space below the rear end portion of the mobile crane 1.

The drainage hose 92 may be omitted. In this case, the drainage hose 92 may drain the water to, for example, a position on the upper surface of the frame 20 located rearward of the battery housing 201. This configuration allows water drained from the drainage hose 92 to wash away sand and dust adhering to the upper surface of the frame 20.

Here, the positional relationships among the aforementioned junction box 51, drainage hose 92, and cooling device 80 (housing 800) will be described with reference to Figs. 8 and 9.

Fig. 8 is a planar schematic diagram illustrating the positional relationship between the cooling device 80 (housing 800) of the cooling system 8 and the drainage tray 9. The term "planar diagram" refers to a diagram illustrating the junction box 51, drainage hose 92, and cooling device 80 (housing 800) as viewed from above. The term "planar view" refers to viewing members from above.

In Fig. 8, the portion indicated by solid-line corresponds to the cooling device 80 (housing 800). In Fig. 8, the portion indicated by two-dot chain line corresponds to the drainage tray 9.

In Fig. 8, the portion with diagonal grid hatching indicates the exhaust port 802 of the cooling device 80 (housing 800). In Fig. 8, the portion with diagonal line hatching indicates the drainage holes 803 on the bottom surface of the cooling device 80 (housing 800).

Fig. 9 is a planar schematic diagram illustrating the positional relationship between the drainage tray 9 and the junction box 51.

In Fig. 9, the portion indicated by two-dot chain line corresponds to the drainage tray 9. In Fig. 9, the portion indicated by dotted line corresponds to the junction box 51.

As illustrated in Fig. 8, the drainage tray 9 is at a position vertically overlapping with a portion of the cooling device 80 (housing 800). Specifically, the drainage tray 9 is at a position vertically overlapping with the exhaust port 802 of the cooling device 80 (housing 800).

The drainage tray 9 is also at a position vertically overlapping with the drainage holes 803 of the cooling device 80 (housing 800). Furthermore, it is preferable for the drainage tray 9 to be at a position vertically overlapping with all the drainage holes 803.

Here, the drainage tray 9 does not need to be at a position vertically overlapping with all the drainage holes 803. In such cases, for example, the drainage tray 9 may be at a position vertically overlapping with the drainage holes 803 that are each at a position vertically overlapping with the junction box 51 (specifically, the terminals 510).

Next, as illustrated in Fig. 9, the drainage tray 9 is at a position vertically overlapping with a portion of the junction box 51. Specifically, the drainage tray 9 is at least at a position vertically overlapping with the terminals 510 of the junction box 51.

In summary, the drainage tray 9 is arranged between the cooling device 80 and the junction box 51 in the vertical direction at a position vertically overlapping with the exhaust port 802 of the cooling device 80 (housing 800), the drainage holes 803 of the cooling device 80 (housing 800), and the terminals 510 of the junction box 51.

Therefore, the mobile crane 1 according to the present embodiment includes the drainage tray 9, thereby suppressing contact between water discharged downward from the cooling device 80 (housing 800) and components such as the terminals 510 of the junction box 51.

### <Functions and Effects of Present Embodiment>

According to the present embodiment having the above configuration, it is possible to implement the mobile crane 1 capable of traveling based on the electric power of the high-voltage battery 50.

Particularly, in the present embodiment, the junction box 51 is cantilever-fixed to the frame 20, and thus, it is possible to suppress damage to the junction box 51 caused by twisting of the frame 20. The reason for this is as stated above.

Furthermore, in the present embodiment, the drainage tray 9 is provided between the junction box 51 and the cooling device 80 (housing 800) in the vertical direction. Therefore, this configuration suppresses contact between water discharged downward from the cooling device 80 (housing 800) and components such as the terminals 510 of the junction box 51. Furthermore, the functions and effects obtained from the configuration provided in the mobile crane 1 according to the present embodiment are as described above.

### <Supplementary Notes>

In the aforementioned embodiment, the junction box 51 is fixed to the upper surface of the frame 20 (specifically, the left-side frame 204). In this arrangement, the upper half of the junction box 51 is arranged above the battery housing 201. In other words, the upper half of the junction box 51 is arranged higher than the upper surface of the frame 20.

The vertical position of the junction box 51 is determined to satisfy the constraints imposed by the arrangement of the junction box 51 in relation to the devices arranged above and below the junction box 51 (e.g., the rear battery 501b and the cooling device 80).

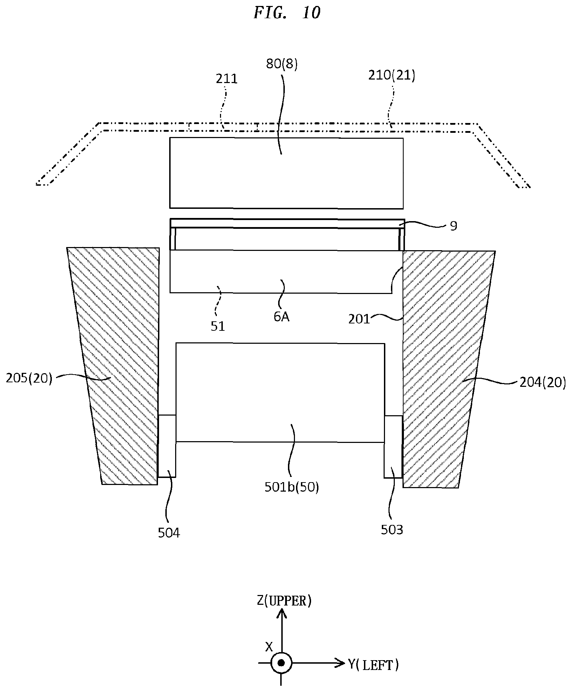

For example, when the constraints require lowering the vertical position of the junction box 51 below the vertical position of the junction box 51 in the present embodiment, the junction box 51 may be cantilever-fixed to the side surface of the frame 20 (e.g., the right side surface of the left-side frame 204), as illustrated in Fig. 10.

In the modified example of Fig. 10, the junction box 51 is fixed to the frame 20 (specifically, the left-side frame 204) by a support 6A. Alternatively, the junction box 51 may be cantilever-fixed to the left side surface of the right-side frame 205.

In the aforementioned embodiment, the batteries 501a, 501b, 502a, 502b of the high-voltage battery 50 are provided in the rear portion of the frame 20. Here, batteries (hereinafter referred to as front batteries) may also be provided in the front portion of the frame 20.

In such cases, the front batteries may be arranged in a battery housing provided in the front portion of the frame 20. A junction box corresponding to the front batteries (hereinafter referred to as front junction box) may also be provided in the front portion of the frame 20.

Even in this configuration, the front junction box may be cantilever-fixed to the frame 20 using a structure identical to the support structure of the junction box 51 in the aforementioned embodiment or the support structure of the junction box 51 in the modified example illustrated in Fig. 10.

In the aforementioned embodiment, the junction box 51 is an example of high-voltage equipment. Here, high-voltage equipment is not limited to junction boxes. For example, the high-voltage equipment may be the high-voltage battery 50 (specifically, the rear battery 501b). Alternatively, the high-voltage equipment may be various devices connected to the high-voltage battery 50.

In the aforementioned embodiment, the drainage tray 9 is inclined at a predetermined angle relative to the horizontal direction, with the right rear side of the drainage tray 9 being the lowest. Here, the inclination direction of the drainage tray is not limited to the case of the aforementioned embodiment. For example, the drainage tray may be inclined at a predetermined angle relative to the horizontal direction, with the left rear side of the drainage tray being the lowest. In this case, the drainage tray may have a drainage port (not illustrated) at the left rear end portion. Then, the drainage tray may drain the collected water to the left rear.

The disclosures of the description, drawings, and abstract included in Japanese Patent Application No. 2022-200129, filed on December 15, 2022, are all incorporated in the present application by reference.

### Industrial Applicability

The crane according to the present invention is not limited to rough terrain cranes and may include, for example, various types of mobile cranes, such as all terrain cranes.

### Reference Signs List

1 Mobile crane
2 Lower travel body
20 Frame
20a Upper plate section
20b Lower plate section
20c Left plate section
20d Right plate section
20e Front plate section
20f Rear plate section
200 Transmission member housing
201 Battery housing
202 Front outrigger support
203 Rear outrigger support
204 Left-side frame
205 Right-side frame
21 Body
210 Rear vehicle cover
211 Exhaust section
22 Front axle
23 Rear axle
24 Front tire
25 Rear tire
26 Outrigger
26a Front outrigger
26b Rear outrigger
3 Upper turn body
31 Turn table
32 Telescopic boom
33 Cab
34 Hoist cylinder
35 Telescopic cylinder
36 Wire rope
37 Hook
38 Winch
4 Transmission member
5 High-voltage electrical system
50 High-voltage battery
501a, 501b Battery
502a, 502b Battery
503, 504 Vibration damping support member
51 Junction box
510 Terminal
52 Travel inverter
53 Travel motor
54 Upper electrical device
6, 6A Support
60 Front plate section
61 Rear plate section
62 Lower plate section
63 Fixed plate section
8 Cooling system
80 Cooling device
800 Housing
801 Upper surface
802 Exhaust port
803 Drainage hole
81 Cooling pipe
9 Drainage tray
90 Bottom portion
91 Peripheral wall portion
92 Drainage hose

## Claims

1. A crane comprising:
an upper slewing body that supports a boom; and
a travel vehicle body that supports the upper slewing body and travels based on electric power of a power supply unit, wherein
the travel vehicle body includes:
a high-voltage equipment that is the power supply unit or a device connected to the power supply unit,
a cooling device that is arranged above the high-voltage equipment, has an exhaust port which is open at a top of the cooling device, and cools the power supply unit, and
a drainage tray that is provided between the high-voltage equipment and the cooling device and drains water which has entered the cooling device from the exhaust port.

2. The crane according to claim 1, wherein
the high-voltage equipment which is the device connected to the power supply unit is a junction box that distributes electric power of the power supply unit to electrical devices.

3. The crane according to claim 1, wherein
the drainage tray guides and drains the water toward a right rear direction or a left rear direction.

4. The crane according to claim 1, wherein
in a planar view of the crane, the drainage tray overlaps with the exhaust port and a terminal of the high-voltage equipment.

5. The crane according to claim 1, wherein
the drainage tray includes a hose which guides the water.

6. The crane according to claim 1, wherein
the travel vehicle body includes a frame having a frame opening in which the power supply unit is arranged, the frame opening being open at least on the top side, and the high-voltage equipment is cantilever-fixed to one of a left-side frame portion and a right-side frame portion flanking the frame opening above the power supply unit.

7. The crane according to claim 1, wherein
the drainage tray is supported by the high-voltage equipment.

8. The crane according to claim 6, wherein
the drainage tray drains the water onto an upper surface of the frame which is rearward of the frame opening.
